# EUROPEAN PATENT SPECIFICATION

(11) **EP 3 142 371 B1**
(45) Date of publication and mention of the grant of the patent: **18.10.2017**
(21) Application number: 16170324.4
(22) Date of filing: 19.05.2016
(51) Int. Cl.: H04N 21/426, H04N 21/462, H04N 21/61, H04N 21/43, H04N 21/439, H04H 20/24, H04H 60/82, H04H 60/11, H04H 40/18, H04H 20/18, H04H 20/26

(54) **RECEPTION DEVICE AND REPRODUCTION METHOD IN RECEPTION DEVICE**
EMPFANGSVORRICHTUNG UND WIEDERGABEVERFAHREN IN EINER EMPFANGSVORRICHTUNG
DISPOSITIF DE RÉCEPTION ET PROCÉDÉ DE REPRODUCTION DANS UN DISPOSITIF DE RÉCEPTION

(30) Priority: 10.09.2015 JP 2015178434
(43) Date of publication of application: 15.03.2017
(73) Proprietor: Alpine Electronics, Inc., Tokyo (JP)
(72) Inventor: Ozaki, Daisuke, Iwaki-city, Fukushima (JP)
(74) Representative: Dolleymores

(56) References cited:
- JP-A- 2013 201 469
- US-A1- 2013 053 058
- US-A1- 2014 189 751

## Description

### Technical Field

The present invention relates to a reception device capable of switching and reproducing broadcasting type content and network type content having the same contents as the broadcasting type content, and a reproduction method in the reception device.

### Background Art:

Simultaneous broadcasting is known in which content having the same contents as broadcasted content is transmitted via an IP (Internet Protocol) network. Reception is possible in either broadcasting type or network type depending on a reception situation, but the network transmission generally tends to be temporally delayed as compared with the broadcasting transmission, and missing information or repeated information can be caused due to the reception switching. There is proposed a reception device capable of eliminating such a temporal offset and performing seamless switching (see Patent Literature 1).

With the device described in Patent Literature 1, a temporal difference between a broadcasting reproduction signal and a network reproduction signal is calculated, and one of the reproduction signals is changed and switched to synchronize with the other reproduction signal based on the calculated temporal difference, thereby being able to prevent missing information or repeated information and perform smooth switching.

### Citation List

### Patent Literature

Patent Literature 1: JP 2013-201469 A

US2013/053058A1 discloses a reception device capable of switching broadcasting type content and network type content.

### Summary of Invention

### Technical Problem

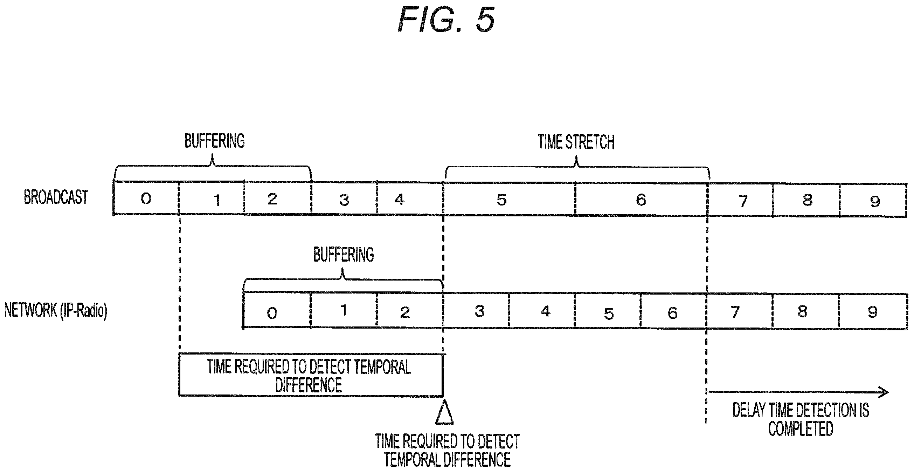

As illustrated in Fig. 5, when an IP network content reproduction signal is temporally delayed by 2 frames relative to a broadcasting content reproduction signal, the device described in Patent Literature 1 buffers the frames "0" to "2" of the broadcasting content in a storage unit, and then similarly buffers the frames "0" to "2" of the IP network content, thereby comparing them and detecting a delay time. The speed of the broadcasting reproduction signal is lowered to 50% (the frames "5" to "6") based on the detected delay time, and is synchronized with a speed of the IP network reproduction signal, and then the broadcasting type is switched to the IP network type, thereby being able to prevent missing or repeated information and perform seamless switching.

As described above, one reproduction speed (reproduction speed of broadcasting reception in Fig. 5) is changed and synchronized with the other reproduction signal (IP network reception signal) based on the detected temporal difference, thereby being able to perform seamless switching, but when broadcasting reception content is switched by tuning, a temporal difference between the broadcasting reproduction signal and the network reproduction signal is different per broadcasting, and thus it is necessary to detect the temporal difference and to repeatedly perform synchronization by a change in reproduction speed at each tuning.

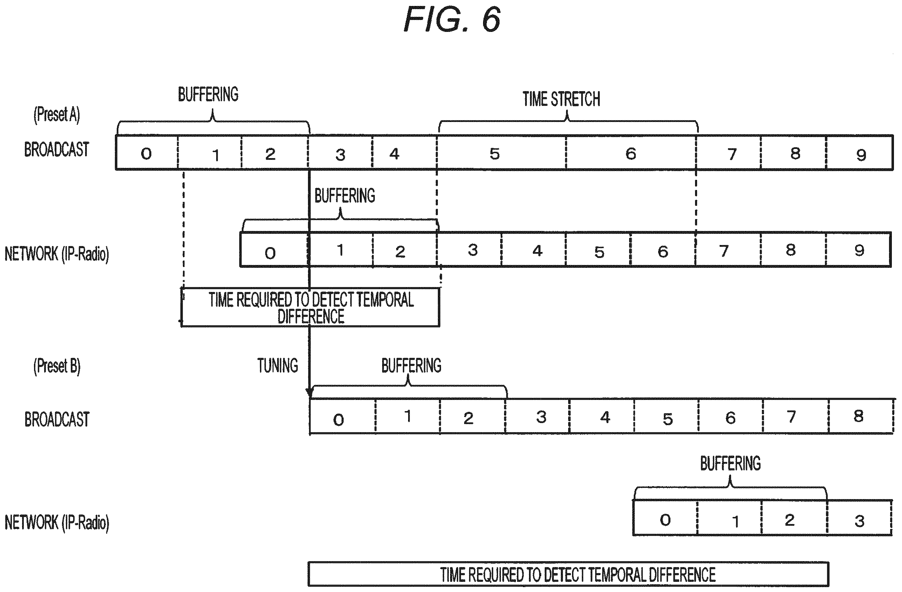

For example, as illustrated in Fig. 6, if a temporal difference between a broadcasting content reproduction signal and an IP network content reproduction signal is detected for a station A, a broadcasting reproduction speed is changed (delayed) and synchronized with the IP network reproduction signal, and a station B is selected. A temporal difference between the broadcasting content reproduction signal and the IP network content reproduction signal is different between the station A and the station B (a temporal difference of 2 frames for the station A and a temporal difference of 5 frames for the station B in Fig. 6), and thus even when the reproduction signals are synchronized with each other based on the detected temporal difference at the station A, a temporal difference needs to be detected again at the station B and the broadcasting reproduction speed needs to be changed and synchronized based on the detected temporal difference. Therefore, it takes a long time to perform seamless switching per tuning due to repeated detection and synchronization.

It is an object of the present invention to provide a reception device capable of seamlessly switching broadcasting content reproduction to IP network content reproduction rapidly and simply even when a reception station is tuned and changed, and a reproduction method in the reception device.

### Solution to Problem

A reception device according to a first aspect of the present invention comprises a reception device as claimed in claim 1.

With the structure, since while the first broadcasting type content is being reproduced, a temporal difference in reproduction signal between the second broadcasting type content and the second network type content is detected by the second temporal difference detection unit, even when tuning is performed for reproducing the second broadcasting type content while the first broadcasting type content or the first network type content is being reproduced, a temporal difference in reproduction signal between the second broadcasting type content and the second network type content does not need to be detected after the tuning, so that the reproduction speed of the second broadcasting type content is changed to synchronize with the second network type content, which enables rapid and simple switching. The structure assumes that three or more broadcasting reception units (the broadcasting reception units and the temporal difference detection units) are provided, and while the first broadcasting type content received from one broadcasting station is being reproduced, a broadcasting type content and a network type content are received from other two or more broadcasting stations in the background thereby to detect a temporal difference between the content reproduction signal twice or more. That is, detecting the temporal difference in reproduction signal between the second broadcasting type content and the second network type content is not limited to one broadcasting station, but may be performed in the background by reception from two or more broadcasting stations.

The broadcasting station for the second broadcasting type content may be assumed as a broadcasting station with a frequency adjacent to the frequency of the first broadcasting type content, or as a broadcasting station for contents with frequencies before and after the frequency of the first broadcasting type content when three broadcasting reception units are present, and can perform the temporal difference detection processing on the background. Further, for example, a broadcasting station with the longest total viewing time in a certain period of time may be assumed as the broadcasting station for the second broadcasting type content, and may be as a broadcasting station for performing the background processing in descendent order of total viewing time when three or more broadcasting reception units are present.

The reception device according to the present invention may be configured such that while the first broadcasting type content or the first network type content is being reproduced, the reproduction speed change unit changes a reproduction speed of the second broadcasting type content to synchronize with the second network type content based on the temporal difference in reproduction signal detected by the second temporal difference detection unit. As described above, three or more broadcasting reception units may be provided so that the broadcasting type content and the network type content can be synchronized with each other in the background by two or more broadcasting stations.

With the structure, since while the first broadcasting type content or the first network type content is being reproduced, the reproduction speed of the second broadcasting type content is changed to synchronize with the second network type content based on the temporal difference in reproduction signal detected by the second temporal difference detection unit, even when tuning is performed for reproducing the second broadcasting type content while the first broadcasting type content or the first network type content is being reproduced, reproduction of the second broadcasting type content can be more rapidly switched to reproduction of the second network type content.

The reception device according to the present invention may comprise a tuning unit for tuning to reproduction of either the first broadcasting type content or the second broadcasting type content.

With the structure, even when reproduction of either the first broadcasting type content or the second broadcasting type content is selected by the tuning operation, rapid switching from the broadcasting type to the network type is enabled, thereby stably reproducing the content.

In the reception device according to the present invention, the tuning unit may be configured to tune to reproduction of either the first broadcasting type content or the second broadcasting type content in response to a preset operation instruction or a manual operation instruction.

With the structure, the user can manually operate or change (tune) the reception station based on previous setting, thereby reproducing a content without an influence of radio wave situation or the like.

In a second aspect, the present invention comprises a reproduction method in a reception device as claimed in claim 4.

### Advantageous Effects of Invention

According to the present invention, it is possible to provide a reception device capable of seamlessly switching reproduction of broadcasting type content to reproduction of IP network type content rapidly and simply even when a reception broadcasting station is tuned and changed, and a reproduction method in the reception device. In particular, a temporal difference in reproduction signal between a broadcasting type content and a network type content is detected in the background for a broadcasting station which is likely to be tuned by the user, and a synchronization processing is further performed by time stretch, thereby rapidly and seamlessly being able to switch reproduction of a broadcasting type content to reproduction of a network type content.

### Brief Description of Drawings

Fig. 1 is a block diagram illustrating a structure of a reception device according to an exemplary embodiment of the present invention.
Fig. 2 is a flowchart illustrating a content reproduction procedure in the reception device of Fig. 1.
Fig. 3 is an explanatory diagram (1) illustrating temporal difference detection and reproduction speed change (time stretch) in the reception device of Fig. 1.
Fig. 4 is an explanatory diagram (2) illustrating temporal difference detection and reproduction speed change (time stretch) in the reception device of Fig. 1.
Fig. 5 is an explanatory diagram (1) illustrating temporal difference detection and reproduction speed change (time stretch) in a conventional reception device.
Fig. 6 is an explanatory diagram (2) illustrating temporal difference detection and reproduction speed change (time stretch) in the conventional reception device.

### Description of Embodiment

An exemplary embodiment of the present invention will be described below with reference to the drawings.

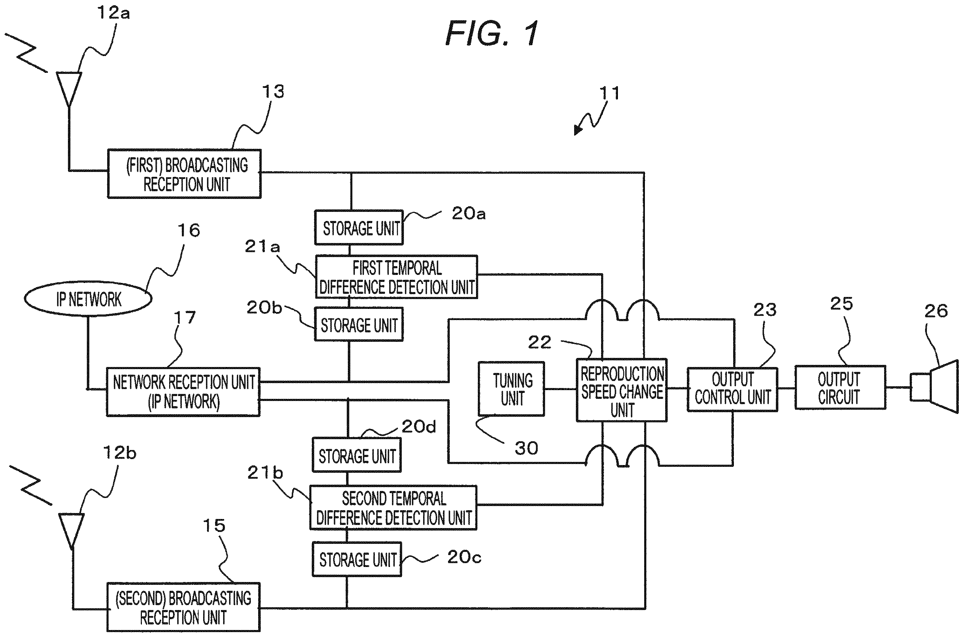

As illustrated in Fig. 1, a reception device 11 according to the exemplary embodiment of the present invention includes a first broadcasting reception unit 13 configured to receive a first broadcasting type content in broadcasting such as AM broadcasting or FM broadcasting via an antenna 12a, a second broadcasting reception unit 15 configured to receive a second broadcasting type content in broadcasting of a different broadcasting station from the first broadcasting type content via an antenna 12b, and a network reception unit 17 configured to receive a first network type content having the same contents as the first broadcasting type content and a second network type content having the same contents as the second broadcasting type content, which are simultaneous broadcasting via an IP network 16. The first broadcasting reception unit 13 and the second broadcasting reception unit 15 are configured of RF amplifier, intermediate frequency amplifier, detection circuit (tuner), and the like, for example. The network reception unit 17 has a function of performing communication control with an IP broadcasting server (not illustrated) and outputting data such as packets including simultaneous broadcasting speech signals of broadcasting type among the data received from the IP broadcasting server.

The reception device 11 includes a storage unit 20a configured to buffer part of the first broadcasting type content received by the first broadcasting reception unit 13 for temporal difference detection described later, a storage unit 20b configured to buffer part of the first network type content received by the network reception unit 17 for temporal difference detection, a storage unit 20c configured to buffer part of the second broadcasting type content received by the second broadcasting reception unit 15 for temporal difference detection, a storage unit 20d configured to buffer part of the second network type content received by the network reception unit 17 for temporal difference detection, a first temporal difference detection unit 21a configured to detect a temporal difference in reproduction signal between the first broadcasting type content and the first network type content, and a second temporal difference detection unit 21b configured to detect a temporal difference in reproduction signal between the second broadcasting type content and the second network type content. The storage units 20a to 20d correspond to storage devices such as hard disk and flash memory. The first and second temporal difference detection units 21a and 21b can find a temporal difference in reproduction signal based on a difference in data output timing between the broadcasting type content and the network type content.

The reception device 11 further includes a reproduction speed change unit 22 configured to delay the reproduction speeds of the first broadcasting type content and the second broadcasting type content based on the temporal differences between the reproduction signals detected by the first temporal difference detection unit 21a and the second temporal difference detection unit 21b, an output control unit 23 configured to perform output control on the first broadcasting type content and the second broadcasting type content which are delayed and synchronized in reproduction speed by the reproduction speed change unit 22, as well as the first network type content and the second network type content, an output circuit 25 configured to amplify a speech signal output from the output control unit 23, a speaker 26 configured to output an output signal output by amplification from the output circuit 25 as a speech signal, and a tuning unit 30 configured to tune a station for user's manually changing or setting a reception station.

The reproduction speed change unit 22 is configured to delay (time stretch) a reproduction speed of the first broadcasting type content to synchronize with a reproduction signal of the first network type content based on a temporal difference between the reproduction signal of the first broadcasting type content and the reproduction signal of the first network type content detected by the first temporal difference detection unit 21a. A network type content of IP network or the like causes a temporal delay due to reproduction of a broadcasting type content in simultaneous broadcasting because it is buffered and distributed by a network server on the network. Therefore, a reproduction speed of a broadcasting type content is delayed by a predetermined time by the reproduction speed change unit 22 based on a detected temporal difference in reproduction between both contents, thereby being able to synchronize the broadcasting type content with the network type content. Similarly also for the second broadcasting type content and the second network type content, the reproduction speed change unit 22 can delay the reproduction speed of the second broadcasting type content by a predetermined time to synchronize with the second network type content based on the temporal difference detected by the second temporal difference detection unit 21b.

The output control unit 23 is configured to switch the broadcasting type content (the first and second broadcasting type contents) and the network type content (the first and second network type contents) for output control, and for example, when a radio wave reception situation is not desirable, can maintain content reproduction quality by the output control of synchronizing the broadcasting type content with the network type content and switching reproduction of the broadcasting type content to reproduction of the network type content.

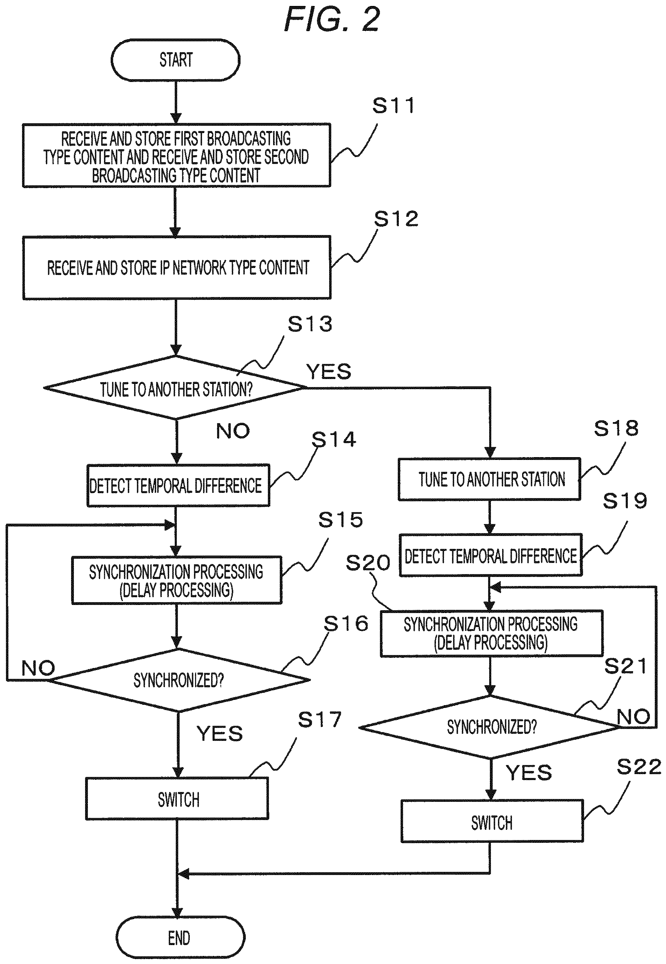

A content reproduction procedure in the reception device 11 according to the present exemplary embodiment will be described below with reference to the flowchart of Fig. 2.

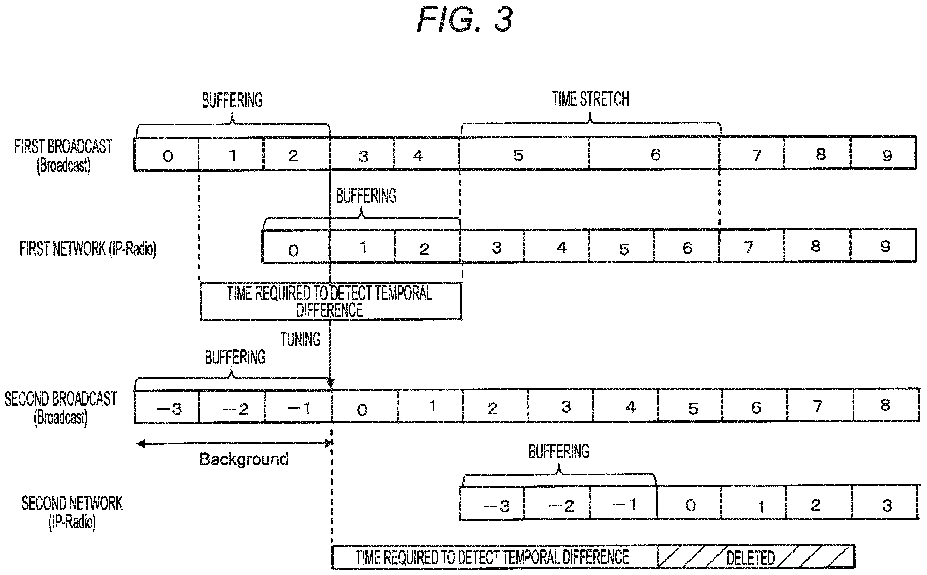

In Fig. 2, the reception device 11 stores part of the first broadcasting type content received by the first broadcasting reception unit 13 in the storage unit 20a and simultaneously stores part of the second broadcasting type content received by the second broadcasting reception unit 15 in the background in the storage unit 20c for temporal difference detection described later (S11). As illustrated in Fig. 3, the three frames "0" to "2" of the first broadcasting type content are buffered (stored), and at the same time the three frames "-3" to "-1" of the second broadcasting type content are buffered on the background.

The reception device 11 then operates to store part of the first network type content and part of the second network type content, which are received by the network reception unit 17, in the storage units 20b and 20d, respectively, for temporal difference detection described later (S12). As illustrated in Fig. 3, the frames "0" to "2" of the first network type content, which are delayed by three frames in time behind the first broadcasting type content, are buffered, and the frames "-3" to "-1" of the second network type content, which are delayed by 5 frames in time behind the second broadcasting type content, start to be buffered later than the first network type content.

The reception device 11 determines the presence of tuning for changing the reception station from the ongoing first broadcasting to the second broadcasting (S13), and when determining that tuning is not performed (No in S13), detects a temporal difference in reproduction between the first broadcasting type content and the first network type content (S14: the first temporal difference detection unit 21a). The above tuning timing is exemplary, and the timing is not limited thereto. As illustrated in Fig. 3, when the three frames (the frames "0" to "2") of the first broadcasting type content and the three frames (the frames "0" to "2") of the first network type content are completely buffered for temporal difference detection, both can be compared with each other, and thus the temporal difference detection is also completed. The reception device 11 performs the synchronization processing of delaying (time stretch) the reproduction speed of the first broadcasting type content based on the temporal difference detected by the first temporal difference detection unit 21a , thereby synchronizing the first broadcasting type content with the first network type content (S15: the reproduction speed change unit 22). As illustrated in Fig. 3, the reproduction speed of the frames "5" and "6" of the first broadcasting type content are assumed at 50% so that the first broadcasting type content is synchronized with the first network type content at the start of the frame "7."

When determining whether the synchronization is completed (S16) and determining that the synchronization is not completed (NO in S16), the reception device 11 repeatedly performs time stretch for the synchronization by the reproduction speed change unit 22 again. When it is determined that the synchronization is completed (YES in S16), the switching from the first broadcasting type content to the first network type content enters the standby state, and when it is determined that reception quality of the first broadcasting type content is lowered, for example, the output control unit 23 switches the first broadcasting type content to the first network type content (S 17).

On the other hand, when determining that tuning is performed (YES in S13) in determining the presence of tuning for changing the reception station from the ongoing first broadcasting to the second broadcasting (S13), the reception device 11 changes (tunes) the reception station (S18). The reception device 11 then detects a temporal difference between the second broadcasting type content and the second network type content (S19: the second temporal difference detection unit 21b). As illustrated in Fig. 3, when the three frames (the frames "-3" to "-1") of the second broadcasting type content and the three frames (the frames "-3" to "-1") of the second network type content are completely buffered for temporal difference detection, both can be compared with each other and thus the temporal difference detection is also completed. A conventional reception device detects a temporal difference by operating the tuning unit 30 to perform tuning for changing the reception station and then buffering the second broadcasting type content and the second network type content in the temporal difference detection, but according to the present exemplary embodiment, the buffering is performed in the background before the tuning (see Fig. 3), thereby reducing a time for temporal difference detection (reduced by three frames according to the present exemplary embodiment as illustrated in Fig. 3).

The reception device 11 then performs the synchronization processing of delaying (time stretch) the reproduction speed of the second broadcasting type content based on the temporal difference detected by the second temporal difference detection unit 21b, thereby synchronizing the second broadcasting type content with the second network type content (S20: the reproduction speed change unit 22). When the reception device 11 determines whether the synchronization is completed (S21) and determines that the synchronization is not completed (NO in S21), the reproduction speed change unit 22 performs time stretch for synchronization again. When it is determined that the synchronization is completed (YES in S21), the switching from the second broadcasting type content to the second network type content enters the standby state, and when the output control unit 23 determines that reception quality of the second broadcasting type content is lowered, the switching is made from the second broadcasting type content to the first network type content (S22).

As described above, with the reception device 11 according to the present exemplary embodiment, reception for detecting a temporal difference between the first broadcasting type content and the first network type content, reception of the second broadcasting type content in the background during buffering, and buffering are performed so that a time to detect a temporal difference between the second broadcasting type content and the second network type content after tuning is reduced, and thus the processing can rapidly proceed to subsequent time stretch, thereby rapidly performing seamless switching from the second broadcasting type content to the second network type content. Although tuning is performed after the second broadcasting type content is buffered in Fig. 3, there may be configured such that the reproduction speed change unit 22 performs time stretch on the second broadcasting type content to complete synchronization with the second network type content based on the detected temporal difference by the second temporal difference detection unit 21b, thereby entering the state in which the switching preparation from the second broadcasting type content to the second network type content is completed.

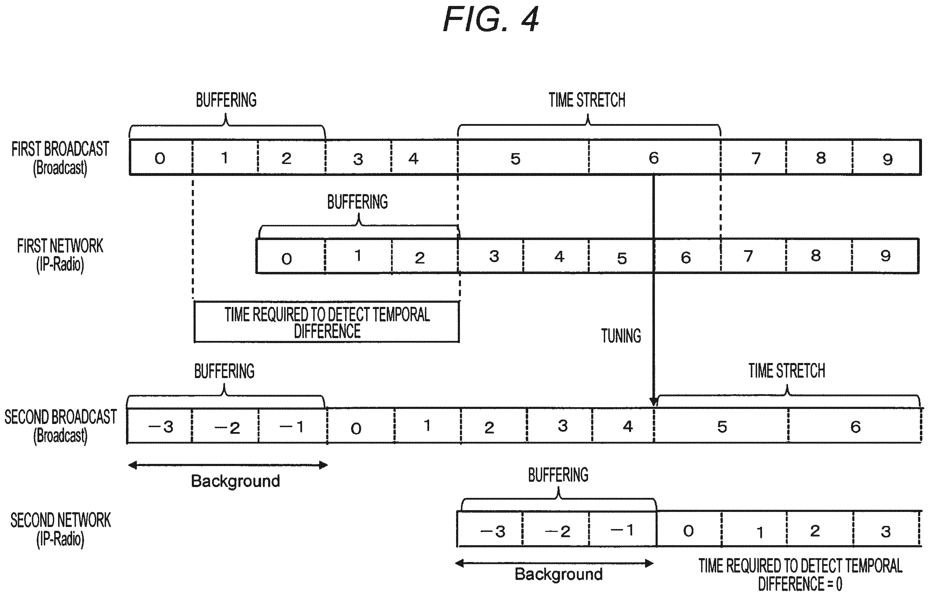

Further, as illustrated in Fig. 4, if the timing to tune to reception of the second broadcasting type content is after part of the second broadcasting type content received for temporal difference detection is completely buffered and part of the second network type content is completely buffered due to tuning for changing the reception broadcasting station, the temporal difference detection is already completed and the time for temporal difference detection enters zero. Further, if time stretch of the second broadcasting type content is completed, and the second broadcasting type content and the second network type content are completely synchronized with each other by the time of the tuning, the switching from the second broadcasting type content to the second network type content is enabled at the same time with the tuning.

As described above, while temporal difference detection between a broadcasting type content in a first broadcasting station and a network type content in simultaneous broadcasting, and synchronization by time stretch are performed, a broadcasting type content in a second broadcasting station and a network type content in simultaneous broadcasting are received and stored on the background thereby to perform temporal difference detection and synchronization by time stretch, so that even when tuning is performed for changing the reception broadcasting station from the first broadcasting station to the second broadcasting station, seamless switching from the second broadcasting type content to the second network type content can be rapidly performed. Irrespective of timing to perform the tuning operation of changing a reception broadcasting station, a second broadcasting type content and a second network type content having the same contents as the second broadcasting type content start to be buffered on the background and are subjected to temporal difference detection and synchronization by time stretch at the same time with buffering the first broadcasting type content and the first network type content having the same contents as the first broadcasting type content so that the switching operation in reproduction from the second broadcasting type content to the second network type content is enabled for subsequent tuning operation.

Two broadcasting reception units are employed according to the present exemplary embodiment for brief description of the exemplary embodiment of the present invention, but three or more broadcasting reception units may be provided. Therefore, there may be configured such that three or more broadcasting reception units are provided, while a first broadcasting type content received from one broadcasting station is being reproduced, a broadcasting type content and a network type content are received from other two or more broadcasting stations on the background thereby to perform temporal difference detection and synchronization for the reproduction signals twice or more. That is, temporal difference detection and synchronization for the reproduction signals of the second broadcasting type content and the second network type content may be performed by two or more broadcasting stations on the background, not limited to one broadcasting station.

A broadcasting station for the second broadcasting type content may be a broadcasting station for contents with a neighboring frequency to the frequency of the first broadcasting type content, and as a broadcasting station for contents with frequencies before and after the frequency of the first broadcasting type content when three or more broadcasting reception units are present, and can perform the temporal difference detection processing and the synchronization processing on the background. Further, a broadcasting station with the longest total viewing time within a predetermined period of time may be a broadcasting station for the second broadcasting type content, and a broadcasting station for the background processing can be set in descending order of total viewing time when three or more broadcasting reception units are present.

### Industrial Applicability

As described above, the reception device according to the present invention produces the effect that even when a reception station is changed by tuning while a content is being reproduced, seamless switching from reproduction of a broadcasting content to reproduction of a network content can be rapidly and simply made, and thus is useful as a reception device capable of rapidly switching and reproducing a broadcasting type content and a network type content having the same contents as the broadcasting type content.

### Reference Signs List

- 11: Reception device
- 12a,: 12b Antenna
- 13: First broadcasting reception unit
- 15: Second broadcasting reception unit
- 16: IP network
- 17: Network reception unit
- 20a, 20b, 20c, 20d: Storage unit
- 21a: First temporal difference detection unit
- 21b: Second temporal difference detection unit
- 22: Reproduction speed change unit
- 23: Output control unit
- 25: Output circuit
- 26: Speaker
- 30: Tuning unit

## Claims

1. A reception device (11) capable of switching and reproducing broadcasting type content and network type content having the same contents as the broadcasting type content, comprising:
a first broadcasting reception unit (13) configured to receive a first broadcasting type content;
a second broadcasting reception unit (15) configured to receive a second broadcasting type content having different contents from the first broadcasting type content;
a network reception unit (17) configure to receive a first network type content having the same contents as the first broadcasting type content and a second network type content having the same contents as the second broadcasting type content;
a first temporal difference detection unit (21a) configured to detect a temporal difference in reproduction signal between the first broadcasting type content and the first network type content;
a reproduction speed change unit (22) configured to change reproduction speed of the first broadcasting type content to synchronize with the first network type content based on the temporal difference detected by the first temporal difference detection unit (21a); and
an output switch unit configured to switch reproduction of the first broadcasting type content to reproduction of the first network type content when the reproduction signals of the first broadcasting type content and the first network type content are synchronized with each other,
**characterized by** a second temporal difference detection unit (21b) configured to detect a temporal difference in reproduction signal between the second broadcasting type content buffered in the background before tuning to reception of said second broadcasting type content and the second network type content while the first broadcasting type content is being reproduced;
the reproduction speed change unit (22) being further adapted to use the temporal difference in reproduction signal detected by the second temporal difference detection unit (21b), on second broadcasting type content and second network type content, to synchronise the second broadcasting type content with the second network type content.

2. The reception device (11) according to claim 1 or 2, **characterized by** comprising:
a tuning unit (30) configured to tune reproduction of either the first broadcasting type content or the second broadcasting type content.

3. The reception device (11) according to any one of claims 1 to 3, **characterized in that** the tuning unit (30) tunes reproduction of either the first broadcasting type content or the second broadcasting type content in response to a preset operation instruction or a manual operation instruction.

4. A reproduction method in a reception device (11) capable of switching and reproducing broadcasting type content and network type content having the same contents as the broadcasting type content, comprising:
a first broadcasting reception step of receiving (13) a first broadcasting type content;
a second broadcasting reception step of receiving (15) a second broadcasting type content having different contents from the first broadcasting type content;
a network reception step of receiving (17) a first network type content having the same contents as the first broadcasting type content and a second network type content having the same contents as the second broadcasting type content;
a first temporal difference detection step of detecting a temporal difference (21a) in reproduction signal between the first broadcasting type content and the first network type content;
a reproduction speed change step (22) of changing reproduction speed of the first broadcasting type content to synchronize with the first network type content based on the temporal difference detected in the first temporal difference detection step;
an output switch step of switching reproduction of the first broadcasting type content to reproduction of the first network type content when the reproduction signals of the first broadcasting type content and the first network type content are synchronized with each other,
**characterized by** a second temporal difference detection step of detecting a temporal difference (21b) in reproduction signal between second broadcasting type content buffered in the background before tuning to reception of said second broadcasting type content and second network type content while the first broadcasting type content is being reproduced, and;
a step of using the reproduction speed change unit to use the temporal difference in reproduction signal, detected by the second temporal difference detection unit, to synchronise the second broadcasting type content with the second network type content.

## Patentansprüche

1. Empfangsvorrichtung (11), die in der Lage ist, einen Rundfunkinhalt und einen Netzwerkinhalt, der denselben Inhalt wie der Rundfunkinhalt aufweist, umzuschalten und wiederzugeben, wobei die Vorrichtung Folgendes umfasst:
eine erste Rundfunkempfangseinheit (13), die so konfiguriert ist, dass sie einen ersten Rundfunkinhalt empfängt;
eine zweite Rundfunkempfangseinheit (15), die so konfiguriert ist, dass sie einen zweiten Rundfunkinhalt empfängt, der andere Inhalte als der erste Rundfunkinhalt aufweist;
eine Netzwerkempfangseinheit (17), die dafür konfiguriert ist, einen ersten Netzwerkinhalt mit dem gleichen Inhalt wie der erste Rundfunkinhalt und einen zweiten Netzwerkinhalt mit dem gleichen Inhalt wie der zweite Rundfunkinhalt zu empfangen;
eine erste zeitliche Differenzerfassungseinheit (21a), die dafür konfiguriert ist, eine zeitliche Differenz in dem Wiedergabesignal zwischen dem ersten Rundfunkinhalt und dem ersten Netzwerkinhalt zu erfassen;
eine Wiedergabegeschwindigkeitsänderungseinheit (22), die dafür konfiguriert ist, die Wiedergabegeschwindigkeit des ersten Rundfunkinhalts zu ändern, um sie mit dem ersten Netzwerkinhalt zu synchronisieren, basierend auf der zeitlichen Differenz, die von der ersten zeitlichen Differenzerfassungseinheit (21a) erfasst wird; und
eine Ausgabeschaltereinheit, die dafür konfiguriert ist, die Wiedergabe des ersten Rundfunkinhalts auf die Wiedergabe des ersten Netzwerkinhalts umzuschalten, wenn die Wiedergabesignale des ersten Rundfunkinhalts und des ersten Netzwerkinhalts miteinander synchronisiert sind,
**gekennzeichnet durch** eine zweite zeitliche Differenzerfassungseinheit (21b), die dafür konfiguriert ist, eine zeitliche Differenz in dem Wiedergabesignal zwischen dem zweiten Rundfunkinhalt, der im Hintergrund gepuffert ist, zu erfassen, vor dem Abstimmen auf den Empfang des zweiten Rundfunkinhalts und des zweiten Netzwerkinhalts, während der erste Rundfunkinhalt wiedergegeben wird;
wobei die Wiedergabegeschwindigkeitsänderungseinheit (22) ferner dafür ausgelegt ist, die zeitliche Differenz in Bezug auf das Wiedergabesignal, die von der zweiten zeitlichen Differenzerfassungseinheit (21b) erfasst wird, für den zweiten Rundfunkinhalt und den zweiten Netzwerkinhalt zu verwenden, um den zweiten Rundfunkinhalt mit dem zweiten Netzwerkinhalt zu synchronisieren.

2. Empfangsvorrichtung (11) nach Anspruch 1 oder 2, **dadurch gekennzeichnet, dass** sie Folgendes umfasst:
eine Abstimmeinheit (30), die dafür konfiguriert ist, die Wiedergabe des ersten Rundfunkinhalts oder des zweiten Rundfunkinhalts abzustimmen.

3. Empfangsvorrichtung (11) nach einem der Ansprüche 1 bis 3, **dadurch gekennzeichnet, dass** die Abstimmeinheit (30) die Wiedergabe des ersten Rundfunkinhalts oder des zweiten Rundfunkinhalts als Reaktion auf einen voreingestellten Operationsbefehl oder einen manuellen Operationsbefehl abstimmt.

4. Wiedergabeverfahren in einer Empfangsvorrichtung (11) das in der Lage ist, einen Rundfunkinhalt und einen Netzwerkinhalt, der denselben Inhalt wie der Rundfunkinhalt aufweist, umzuschalten und wiederzugeben, wobei das Verfahren Folgendes umfasst:
einen ersten Rundfunkempfangsschritt zum Empfangen (13) eines ersten Rundfunkinhalts;
einen zweiten Rundfunkempfangsschritt zum Empfangen (15) eines zweiten Rundfunkinhalts, der Inhalte aufweist, die sich von dem ersten Rundfunkinhalt unterscheiden;
einen Netzwerkempfangsschritt zum Empfangen (17) eines ersten Netzwerkinhalts mit dem gleichen Inhalt wie der erste Rundfunkinhalt und eines zweiten Netzwerkinhalts mit dem gleichen Inhalt wie der zweite Rundfunkinhalt;
einen ersten zeitlichen Differenzerfassungsschritt zum Erfassen einer zeitlichen Differenz (21a) in einem Wiedergabesignal zwischen dem ersten Rundfunkinhalt und dem ersten Netzwerkinhalt;
einen Wiedergabegeschwindigkeitsänderungsschritt (22) zum Ändern der Wiedergabegeschwindigkeit des ersten Rundfunkinhalts, um sie mit dem ersten Netzwerkinhalt zu synchronisieren, basierend auf der zeitlichen Differenz, die in dem ersten zeitlichen Differenzerfassungsschritt erfasst wird;
einen Ausgabeschalterschritt zum Umschalten der Wiedergabe des ersten Rundfunkinhalts auf die Wiedergabe des ersten Netzwerkinhalts, wenn die Wiedergabesignale des ersten Rundfunkinhalts und des ersten Netzwerkinhalts miteinander synchronisiert sind,
**gekennzeichnet durch** einen zweiten zeitlichen Differenzerfassungsschritt zum Erfassen einer zeitlichen Differenz (21b) in einem Wiedergabesignal zwischen dem im Hintergrund gepufferten zweiten Rundfunkinhalt vor dem Feineinstellen auf den Empfang des zweiten Rundfunkinhalts und des zweiten Netzwerkinhalts, während der erste Rundfunkinhalt wiedergegeben wird, und;
einen Schritt des Verwendens der Wiedergabegeschwindigkeitsänderungseinheit, um die zeitliche Differenz in dem Wiedergabesignal, die von der zweiten zeitlichen Differenzerfassungseinheit erfasst wird, zum Synchronisieren des zweiten Rundfunkinhalts mit dem zweiten Netzwerkinhalt zu verwenden.

## Revendications

1. Dispositif de réception (11) pouvant commuter et reproduire du contenu de type diffusion et du contenu de type réseau possédant les mêmes contenus que le contenu de type diffusion, comportant :
une première unité de réception de diffusion (13) configurée pour recevoir un premier contenu de type diffusion ;
une seconde unité de réception de diffusion (15) configurée pour recevoir un second contenu de type diffusion possédant des contenus différents du premier contenu de type diffusion ;
une unité de réception de réseau (17) configurée pour recevoir un premier contenu de type réseau possédant les mêmes contenus que le premier contenu de type diffusion et un second contenu de type réseau possédant les mêmes contenus que le second contenu de type diffusion ;
une première unité de détection de différence temporelle (21a) configurée pour détecter une différence temporelle dans le signal de reproduction entre le premier contenu de type diffusion et le premier contenu de type réseau ;
unité de changement de vitesse de reproduction (22) configurée pour changer la vitesse de reproduction du premier contenu de type diffusion afin de le synchroniser avec le premier contenu de type réseau sur la base de la différence temporelle détectée par la première unité de détection de différence temporelle (21a) ; et
une unité de commutation de sortie configurée pour commuter la reproduction du premier contenu de type diffusion vers la reproduction du premier contenu de type réseau lorsque les signaux de reproduction du premier contenu de type diffusion et du premier contenu de type réseau sont synchronisés l'un avec l'autre,
**caractérisé par** une seconde unité de détection de différence temporelle (21b) configurée pour détecter une différence temporelle dans le signal de reproduction entre le second contenu de type diffusion mis en mémoire tampon à l'arrière-plan avant avant une syntonisation avec la réception dudit second contenu de type diffusion et du second contenu de type réseau tandis que le premier contenu de type diffusion est reproduit ;
l'unité de changement de vitesse de reproduction (22) étant en outre conçue pour utiliser la différence temporelle dans le signal de reproduction détecté par la seconde unité de détection de différence temporelle (21b), sur le second contenu de type diffusion et le second contenu de type réseau, pour synchroniser le second contenu de type diffusion avec le second contenu de type réseau.

2. Dispositif de réception (11) selon la revendication 1 ou 2, **caractérisé par le fait qu'**il comporte :
une unité de syntonisation (30) configurée pour se syntoniser avec la reproduction soit du premier contenu de type diffusion soit du second contenu de type diffusion.

3. Dispositif de réception (11) selon l'une quelconque des revendications 1 à 3, **caractérisé en ce que** l'unité de syntonisation (30) se syntonise avec la reproduction soit du premier contenu de type diffusion soit du second contenu de type diffusion en réponse à une instruction de fonctionnement préréglée ou une instruction de fonctionnement manuelle.

4. Procédé de reproduction dans un dispositif de réception (11) pouvant commuter et reproduire du contenu de type diffusion et du contenu de type réseau possédant les mêmes contenus que le contenu de type diffusion, comportant :
une première étape de réception de diffusion consistant à recevoir (13) un premier contenu de type diffusion ;
une seconde étape de réception de diffusion consistant à recevoir (15) un second contenu de type diffusion possédant des contenus différents du premier contenu de type diffusion ;
une étape de réception de réseau consistant à recevoir (17) un premier contenu de type réseau possédant les mêmes contenus que le premier contenu de type diffusion et un second contenu de type réseau possédant les mêmes contenus que le second contenu de type diffusion ;
une première étape de détection d'une différence temporelle consistant à détecter une différence temporelle (21a) dans le signal de reproduction entre le premier contenu de type diffusion et le premier contenu de type réseau ;
une étape de changement de vitesse de reproduction (22) consistant à changer la vitesse de reproduction du premier contenu de type diffusion afin de le synchroniser avec le premier contenu de type réseau sur la base de la différence temporelle détectée dans la première étape de détection de différence temporelle ;
une étape de commutation de sortie consistant à commuter la reproduction du premier contenu de type diffusion vers la reproduction du premier contenu de type réseau lorsque les signaux de reproduction du premier contenu de type diffusion et du premier contenu de type réseau sont synchronisés l'un avec l'autre,
**caractérisé par** une seconde étape de détection de différence temporelle consistant à détecter une différence temporelle (21b) dans le signal de reproduction entre un second contenu de type diffusion mis en mémoire tampon à l'arrière-plan avant une syntonisation avec la réception dudit second contenu de type diffusion et du second contenu de type réseau tandis que le premier contenu de type diffusion est reproduit, et ;
une étape consistant à utiliser l'unité de changement de vitesse de reproduction pour utiliser la différence temporelle dans le signal de reproduction, détecté par la seconde unité de détection de différence temporelle, afin de synchroniser le second contenu de type diffusion avec le second contenu de type réseau.
